# FASCICULE DE BREVET EUROPEEN

(11) **EP 1 834 442 B1**
(45) Date de publication et mention de la délivrance du brevet: **06.05.2009**
(21) Numéro de dépôt: 05850454.9
(22) Date de dépôt: 14.12.2005
(51) Int. Cl.: H04L 9/08, H04N 7/167, H04N 7/16

(54) **MÉTHODE DE TRANSMISSION DE DONNÉES NUMÉRIQUES**
VERFAHREN ZUR ÜBERTRAGUNG DIGITALER DATEN IN EINEM LOKALEN NETZWERK
METHOD FOR TRANSMISSION OF DIGITAL DATA IN A LOCAL NETWORK

(30) Priorité: 16.12.2004 EP 04106646
(43) Date de publication de la demande: 19.09.2007
(73) Titulaire: Nagravision S.A., 1033 Cheseaux-sur-Lausanne (CH)
(72) Inventeur: MOREILLON, Guy, 1042 Bioley-Orjulaz (CH)
(74) Mandataire: Leman Consulting S.A.
(86) Numéro de dépôt international: PCT/EP2005/056775
(87) Numéro de publication internationale: WO 2006/064017

(56) Documents cités:
- WO-A-20/04068493
- US-A1- 2003 002 675
- US-A1- 2004 032 950

## Description

### Domaine de l'invention

La présente invention concerne une méthode de transmission de données numériques d'un contenu audio/vidéo dans un réseau local. Plus particulièrement, la méthode de l'invention s'applique à un ou plusieurs réseaux domestiques d'appareils multimédia.

### Arrière plan technique

Un réseau domestique numérique est un ensemble d'appareils audio-visuels reliés par des interfaces numériques de communication. Ces appareils incluent par exemple des décodeurs de télévision numérique, lecteurs / enregistreurs de disques optiques, enregistreurs vidéo munis de disques durs, ordinateurs ou autres plate-formes permettant l'accès à un contenu audio/vidéo payant diffusé. Le réseau domestique appartient à un abonné à des programmes de télévision numérique prédéfinis par exemple et chaque appareil du réseau peut accéder uniquement au contenu de ces programmes. L'accès est géré par un module de sécurité inséré dans chaque appareil du réseau. Ce module, par exemple sous la forme d'une carte à puce, contient des données propres à l'abonné consistant en des droits d'accès aux programmes. Il permet aussi une identification de chaque appareil connecté sur le réseau domestique et le décodage des données.

Selon une configuration particulière le réseau domestique comprend un enregistreur de données audio/vidéo connecté d'une part à un serveur de diffusion et d'autre part à une pluralité de décodeurs ou "set-top-box". Un contenu audio/vidéo crypté est diffusé par le serveur pour être soit décrypté par un ou plusieurs décodeurs pour la visualisation directe, soit stocké dans une mémoire de masse de l'enregistreur consistant en général en un disque dur. Chaque décodeur peut extraire tout ou partie de ce contenu stocké pour une visualisation à un moment choisi par l'utilisateur.

Une solution consiste à enregistrer les données du flux entrant sous leur forme brute et chaque décodeur du réseau lit et décrypte ces données au moyen des mots de contrôle CW extraits des messages de contrôle ECM. La décryption des données dépend en outre des droits contenus dans le module de sécurité associé à chaque décodeur et qui sont obtenus au moyen de messages d'administration EMM.

L'inconvénient majeur de cette solution est que des données stockées depuis un certain temps ne peuvent plus être décryptées par les décodeurs du réseau car les droits contenus dans les modules de sécurité ne sont plus valides. En effet, lorsqu'un flux est visualisé en direct sans stockage intermédiaire, les mots de contrôle CW concordent avec les droits régulièrement mis à jour à l'aide des messages d'administration EMM. Par contre, les droits des messages EMM récemment mis à jour dans le module de sécurité lors de la visualisation en direct ne peuvent plus permettre la visualisation d'un contenu dont les messages ECM incluent des anciens mots de contrôle.

Une autre solution est décrite dans le document US2004/032950 dans laquelle une communication sécurisée est effectuée entre deux domaines d'encryption en utilisant un module de sécurité. Selon une variante, un récepteur équipé d'un module de sécurité reçoit un contenu diffusé encrypté avec une première clé, le décrypte puis le ré-encrypte avec une seconde clé locale issue d'un flux généré par le module de sécurité. Le contenu ainsi ré-encrypté est transmis vers une unité de stockage où il est restitué par décryption avec la clé locale obtenue auprès d'un serveur de vente via un canal sécurisé. Afin d'éviter la copie du contenu ré-encrypté, la clé locale est propre à chaque unité de stockage.

### Description sommaire de l'invention

Le but de la présente invention est d'une part, de permettre une lecture d'un contenu stocké par un enregistreur vidéo numérique depuis un décodeur du réseau local quel que soit le temps écoulé entre le stockage et la lecture, et d'autre part d'empêcher le transfert ou la copie abusif du contenu stocké d'un réseau à un autre.

Ce but est atteint par une méthode transmission de données numériques dans un réseau local comprenant des membres constitués par au moins une première unité multimédia disposant de moyens de stockage de contenus et au moins une seconde unité multimédia destinée à restituer le contenu, ladite première unité multimédia étant connectée d'une part à un serveur de diffusion de données audio/vidéo numériques encryptées et d'autre part à la seconde unité multimédia chaque membre possédant un module de sécurité incluant une clé de réseau, ladite première unité multimédia reçoit et décrypte les données encryptées formant un contenu diffusé par le serveur de diffusion et re-encrypte le contenu préalablement décrypté, ladite méthode est caractérisée en ce que le contenu est re-encrypté avec une clé aléatoire et transmis à la seconde unité multimédia accompagné par un bloc d'autorisation comprenant la clé aléatoire encryptée avec la clé de réseau, ladite seconde unité multimédia décrypte le bloc d'autorisation et extrait la clé aléatoire servant à décrypter le contenu.

La première unité multimédia est ici par exemple un enregistreur de données audio/vidéo numériques connecté au serveur de diffusion. La seconde unité multimédia connectée à l'enregistreur peut consister en un décodeur ou "set-top-box" de télévision numérique. Le contenu diffusé est décrypté par l'enregistreur au moyen des mots de contrôle issu des messages de contrôle en fonction des droits contenus dans le module de sécurité. Ensuite, le contenu décrypté est re-encrypté avec une clé aléatoire générée par le module de sécurité avant son stockage sur le disque dur par exemple de l'enregistreur.

Il est à noter que les membres du réseau local peuvent être connectés au moyen de câbles, de liaisons sans fil ou de manière mixte où certains membres sont câblés et d'autres non.

De plus chaque membre du réseau local possède une clé propre audit réseau. Le contenu stocké et encrypté avec la clé aléatoire est transmis à un ou plusieurs décodeurs membres du réseau avec un bloc d'autorisation. Ce bloc est constitué d'un cryptogramme formé au moins par la clé aléatoire encryptée avec la clé de réseau. Chaque membre du réseau partageant la même clé de réseau, peut extraire la clé aléatoire du cryptogramme permettant de décrypter le contenu.

Ainsi grâce aux étapes de décryption et de re-encryption exécutées avant le stockage, le contenu devient accessible aux membres du réseau indépendamment du décalage temporel qui peut se présenter entre un mot de contrôle et des droits dans le module de sécurité.

De plus, l'avantage d'un tel système est que le contenu circule sous forme encryptée dans le réseau jusqu'à ce qu'il soit lu. La décryption du contenu est réalisée sous le contrôle du module de sécurité possédant la clé de réseau. Une copie de ce contenu ne pourra donc pas être décryptée par un décodeur appartenant à un autre réseau local. Un décodeur "étranger" connecté au réseau ne peut pas non plus décrypter le contenu du fait qu'il ne possède pas la clé de réseau adéquate dans son module de sécurité.

Selon une variante de configuration, le réseau local est composé de sous-réseaux domestiques ayant chacun une clé propre. Ce type de configuration peut se présenter dans un quartier ou un immeuble d'habitation où chaque ménage, constituant un sous-réseau, possède au moins un enregistreur auquel sont connectés des décodeurs. Le serveur de diffusion gère les différents sous-réseaux et comprend en outre un serveur de licences possédant les clés de chaque sous-réseau.

La présente invention décrit également une méthode dans laquelle le réseau local comprend au moins un membre constitué par un sous-réseau comprenant au moins une première unité multimédia disposant de moyens de stockage de contenus connectée à au moins une seconde unité multimédia destinée à restituer le contenu, ledit sous-réseau étant connecté à un serveur de diffusion de données audio/vidéo numériques encryptées et à un serveur de licences, chaque unité du sous-réseau possède un module de sécurité incluant une clé personnelle du sous-réseau et une clé publique correspondant à une clé privée propre au serveur de licences, ladite méthode est caractérisée en ce qu'elle comprend les étapes suivantes:
- transmission de données encryptées formant un contenu par le serveur de diffusion au serveur de licences chargé d'attribuer un identifiant audit contenu,
- réception et décryption du contenu par la première unité multimédia du sous-réseau,
- re-encryption du contenu préalablement décrypté au moyen d'une clé aléatoire,
- formation d'un bloc d'autorisation comprenant au moins un bloc d'informations identifiant le contenu, un bloc de signature du serveur de licences et la clé aléatoire encryptée avec la clé personnelle du sous-réseau,
- transmission du contenu re-encrypté accompagné par le bloc d'autorisation à la seconde unité multimédia,
- vérification de l'authenticité du contenu au moyen du bloc d'information et du bloc de signature du serveur.
- extraction par la seconde unité multimédia de la clé aléatoire du bloc d'autorisation et décryption du contenu avec ladite clé aléatoire.

Le contenu transmis par le serveur de diffusion est identifié par le serveur de licences avec un identifiant ou bloc d'informations signé par ledit serveur. Ce contenu est ensuite transmis aux enregistreurs des sous-réseaux qui le décrypte et le re-encrypte avec une clé aléatoire avant de le stocker ou de le diffuser dans les sous-réseaux respectifs. Chaque enregistreur génère un bloc d'autorisation, parfois appelé "Keysafe", contenant au moins la clé aléatoire encryptée avec la clé propre au sous-réseau et un bloc d'informations identifiant le contenu signé par le serveur de licences. Ce bloc d'autorisation peut aussi inclure des données comme un numéro du module de sécurité, un code de type de contenu, un identifiant du canal de diffusion, la date courante, etc.

L'avantage de cette configuration en sous-réseaux est qu'un contenu peut être partagé avec d'autres sous-réseaux connectés aux mêmes serveurs de diffusion et de licences. Le serveur de licences étant connu par la signature du bloc d'informations identifiant le contenu, un autre sous-réseau peut requérir à ce serveur une conversion du bloc d'autorisation afin de permettre la décryption du contenu reçu.

### Brève description des figures

L'invention sera mieux comprise grâce à la description détaillée qui va suivre et qui se réfère aux figures annexées données à titre d'exemples nullement limitatifs.

La figure 1 illustre un schéma bloc d'un réseau domestique connecté à un serveur de diffusion comprenant un enregistreur de données audio/vidéo relié à un ensemble de décodeurs.

La figure 2 illustre un schéma bloc d'un réseau local comprenant un serveur de diffusion et un serveur de licences connecté à un ensemble de sous-réseaux comprenant un enregistreur de données audio/vidéo relié à un ensemble de décodeurs.

### Description détaillée de l'invention

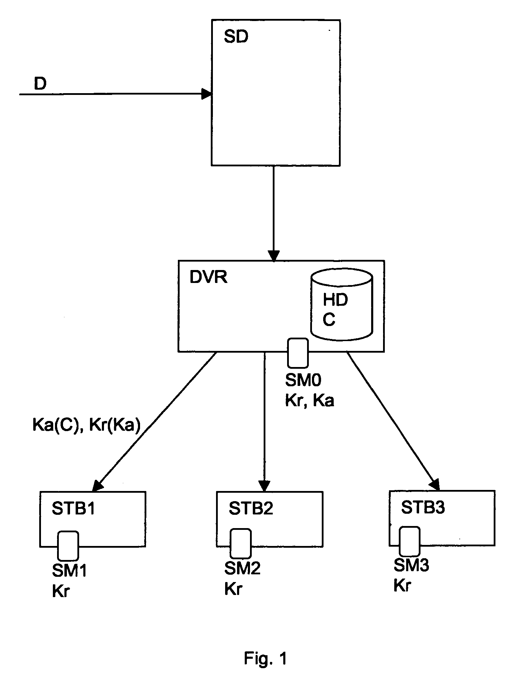

Le réseau domestique de la figure 1 comprend une unité multimédia principale, en l'occurrence un décodeur / enregistreur (DVR) de télévision numérique équipé d'un disque dur (HD) par exemple, connectée d'une part à un serveur de diffusion (SD) et d'autre part à une pluralité d'unités par exemple des décodeurs (STB1, STB2, STB3). Ces derniers peuvent également être équipés d'un disque dur fixe ou amovible, et/ou d'enregistreurs / lecteurs de supports de stockage de données amovibles tels que des disques magnétiques et/ou optiques (CD-MO, CD, DVD...), des bandes magnétiques, et/ou d'une unité mémoire amovible du type Flash, etc.

Le serveur de diffusion (SD), parfois appelé "Head End" reçoit des données D audio/vidéo numériques cryptées de diverses sources (câbles, satellites, antennes d'émission terrestres) et les prépare pour leur distribution dans des réseaux locaux en général câblés. Il joue également un rôle de centre de gestion contrôlant la diffusion des contenus (C) au moyen des messages de contrôle ECM et d'administration EMM insérés dans le flux des données audio/vidéo.

Toutes les unités du réseau domestique, ainsi que la principale, sont équipées de modules de sécurité (SM0, SM1, SM2, SM3) en général sous forme de cartes à puce amovibles.

Chaque module de sécurité appartenant à un même réseau domestique partage une clé de réseau (Kr) cryptographique permettant de lier un contenu (C) au réseau. Ainsi chaque unité du réseau peut accéder au contenu (C) pour autant qu'elle possède cette clé (Kr).

Le contenu (C) diffusé par le serveur (SD) est décrypté d'une manière connue par le décodeur / enregistreur (DVR) au moyen des mots de contrôle (CW) extraits des messages de contrôle (ECM) en fonction des droits contenu dans son module de sécurité (SM0). Une fois décrypté le contenu (C) est immédiatement re-encrypté avec une clé aléatoire (Ka) fournie par le module de sécurité (SM0) puis soit stocké dans le disque dur (HD), soit diffusé directement aux unités (décodeurs) du réseau.

Parallèlement un cryptogramme ou bloc d'autorisation Kr(Ka) est formé en encryptant la clé aléatoire Ka avec la clé de réseau (Kr). Le contenu re-encrypté Ka(C) est transmis à un ou plusieurs décodeurs du réseau accompagné de ce bloc Kr(Ka) à partir duquel le module de sécurité associé extrait la clé aléatoire (Ka) à l'aide de la clé de réseau (Kr). Cette clé (Ka) permet la décryption du contenu par le ou les décodeurs en vue de sa restitution sur un téléviseur par exemple.

Un contenu encrypté Ka(C) peut également être transféré d'un décodeur à un autre du même réseau par l'intermédiaire d'un support amovible (disque dur, disque optique et/ou magnétique, mémoire Flash par exemple). En effet le contenu Ka(C) encrypté avec la clé aléatoire (Ka) sera décrypté grâce à la clé de réseau (Kr) connue des modules de sécurité de toutes les unités du réseau et qui permet d'obtenir la clé aléatoire (Ka) à partir du bloc d'autorisation Kr(Ka).

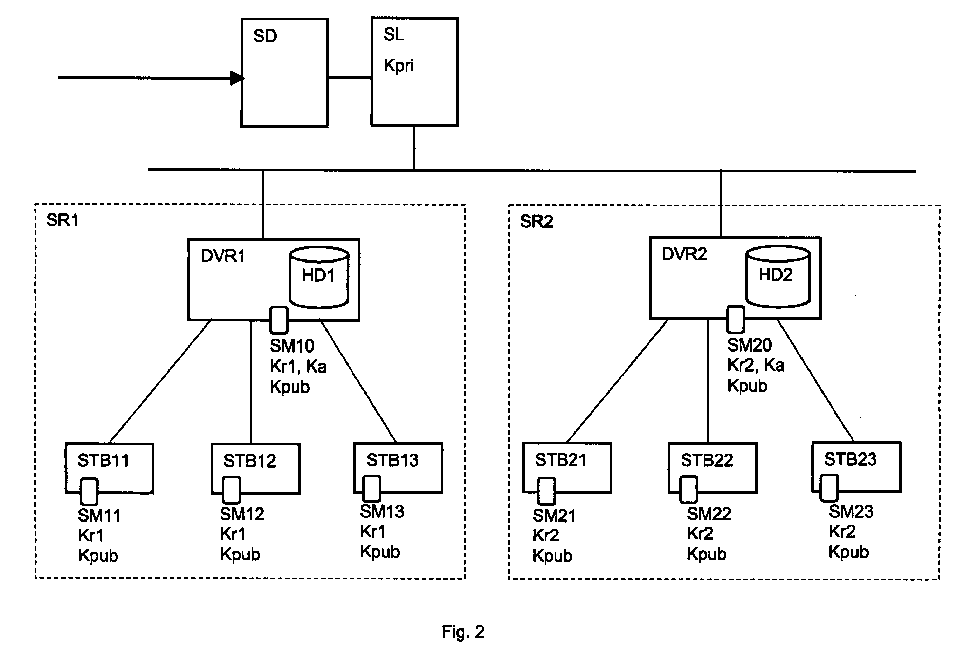

Le réseau local de la figure 2 comprend un ensemble de sous-réseaux (SR1, SR2) connecté à un serveur de diffusion (SD) et à un serveur de licences (SL). Chaque sous-réseau est composé d'au moins un décodeur / enregistreur (STB10, STB20) principal auquel est connectée une pluralité d'unités, par exemple des décodeurs (STB11..., STB21...). Toutes les unités d'un sous-réseau (SR1, SR2) donné partagent une clé (Kr1, Kr2) propre audit sous-réseau contenue dans les modules de sécurités (SM10, SM11..., SM20, SM21...) respectifs. Le serveur de licences (SL), qui peut d'ailleurs être intégré dans le serveur de diffusion (SD), possède et gère toutes les clés des sous-réseaux qui y sont connectés. De plus, tous les modules de sécurité des unités membres de sous-réseaux dépendant d'un même serveur de licences (SL) possèdent une clé publique (Kpub) dudit serveur (SL).

Un contenu (C) est diffusé dans un sous-réseau (SR1, SR2) après décryption et re-encryption avec une clé aléatoire (Ka) générée par le module de sécurité de l'unité principale (STB10, STB20) comme dans le cas décrit plus haut. Par contre, le bloc d'autorisation [Kr1 (Ka), infoC, sign(infoC, Kpri)] contient en plus de la clé aléatoire (Ka) encryptée avec la clé du sous-réseau (Kr1), un bloc d'informations (infoC) identifiant le contenu (C) signé avec la clé privée (Kpri) du serveur de licences (SL). La signature sign(infoC, Kpri) du bloc d'information est constituée par un code d'authentification H(infoC) obtenu par exemple avec une fonction unidirectionnelle de hachage H exécutée sur ledit bloc et encrypté avec la clé privée (Kpri) du serveur de licences (SL). Elle peut aussi être constituée par un code d'authentification (MAC) Message Authenticaton Code généré avec une clé symétrique.

Cette signature sign(infoC, Kpri) permet au module de sécurité d'un décodeur du sous-réseau de vérifier l'authenticité du contenu par comparaison du code d'authentification reçu et décrypté au moyen de la clé publique (Kpub) du serveur (SL) avec le code d'authentification calculé à partir du bloc d'information (infoC) reçu.

Un contenu re-encrypté par un décodeur/enregistreur d'un sous-réseau (SR2) peut être mis à disposition d'un autre sous-réseau (SR1) appartenant au même réseau local. En effet, un utilisateur d'un sous réseau (SR1), informé par exemple au moyen d'une grille de programmes affichée sur son téléviseur peut sélectionner un contenu (C) disponible sur le sous-réseau (SR2). Ce contenu est reçu avec un bloc d'autorisation [Kr2(Ka), infoC, sign(infoC, Kpri)] dont il ne peut pas décrypter la clé aléatoire (Ka) car elle est encryptée avec la clé (Kr2) du sous-réseau d'origine (SR2).

Afin de permettre la décryption du contenu, le module de sécurité (SM11) du décodeur (STB11) nécessite un nouveau bloc d'autorisation de la part du serveur de licences (SL). Le bloc d'autorisation [Kr2(Ka), infoC, sign(infoC, Kpri)] reçu est alors transmis au serveur de licences (SL) qui vérifie son authenticité au moyen du bloc d'information (infoC) et de sa signature sign(infoC, Kpri). Après une vérification réussie, le serveur de licences (SL) transmet, en réponse, au décodeur (STB11) un bloc d'autorisation recomposé [Kr1 (Ka), infoC, sign(infoC, Kpri)] comprenant la clé aléatoire (Ka) encryptée avec la clé du sous-réseau concerné, ici Kr1, et le bloc d'information (infoC) signé par le serveur de licences (SL). Une vérification de l'authenticité du nouveau bloc reçu peut être effectuée de la manière décrite plus haut. Lorsque le bloc est considéré comme authentique, c'est-à-dire reconnu par le serveur de licences (SL), le module de sécurité (SM11) du décodeur (STB11) extrait la clé aléatoire (Ka) avec la clé (Kr1) correspondante du sous-réseau (SR1) et décrypte le contenu (C).

Afin d'identifier le sous-réseau ayant généré le bloc d'autorisation, celui-ci inclut un identifiant du sous-réseau concerné ainsi qu'une signature effectuée avec la clé du sous-réseau sur l'ensemble des données du bloc. Dans l'exemple, le bloc [Kr2(Ka), infoC, sign(infoC, Kpri)] se complète par l'identifiant IDSR2 du sous réseau ayant fourni le contenu, ce qui donne [Kr2(Ka), infoC, sign(infoC, Kpri), IDSR2, sign(B, Kr2)] où sign(B, Kir2) représente la signature avec la clé (Kr2) du sous-réseau (SR2) effectuée sur toutes les données (B) ou éléments (Kr2(Ka), infoC, sign(infoC, Kpri), IDSR2) du bloc précédant ladite signature. A la réception d'un tel bloc, le serveur de licences (SL) peut vérifier la signature car il possède la clé (Kr2) et génère le bloc d'autorisation [Kr1 (Ka), infoC, sign(infoC, Kpri), sign(B, Kpri)] nécessaire au décodeur (STB11) du sous-résau (SR1) ayant requis le contenu où sign(B, Kpri) représente la signature faite sur le bloc avec la clé privée (Kpri) du serveur de licence (SL). L'origine du bloc est vérifiée par le module de sécurité (SM11) du décodeur (STB11) grâce à la signature sign(B, Kpri) qu'il décrypte avec la clé publique (Kpub) du serveur de licence (SL) à disposition de toutes les unités du réseau local.

En principe, dans un bloc d'autorisation, les données secrètes telles que des clés d'encryption sont encryptées avec une clé secrète ou la clé publique du destinataire, tandis que des données ou blocs d'informations sont signés afin de permettre une vérification de leur authenticité après transmission et ceci avant la décryption d'une clé.

Un échec de la vérification est enregistré par le serveur et un message d'erreur peut être envoyé au sous-réseau concerné et signalé par l'un ou l'autre décodeur par un affichage sur l'écran du téléviseur par exemple.

Selon une réalisation préférée, les clés des sous-réseaux (Kr1, Kr2, ...) forment des paires de clés asymétriques (Kpubr1, Kprir1, Kpubr2, Kprir2,...). Les clés publiques (Kpubr1, Kpubr2,...) de chaque paire sont stockées dans le serveur de licences (SL) tandis que les clés privées (Kprir1, Kprir2,...) correspondantes sont stockées dans les modules de sécurité (SM10, SM11, SM12,..., SM20, SM21, SM22,...) des unités (DRV1, STB11, STB12,..., DRV2, STB21, STB22,...) respectives de chaque sous-réseau (SR1, SR2,...). Ainsi, dans les blocs d'autorisation accompagnent les contenus (C), la ou les clés aléatoires (Ka) sont encryptées avec la clé publique du sous-réseau où le contenu a été re-encrypté.

Lors de la transmission d'un contenu (C) d'un sous-réseau (SR2) à un autre sous-réseau (SR1), le bloc d'autorisation généré par le module de sécurité (SM21) décodeur (STB21) du sous-réseau (SR2) d'origine comprend les éléments suivants: la clé aléatoire (Ka) encryptée avec la clé publique (Kpubr2) du sous-réseau (SR2), Kpubr2(Ka), le bloc d'information (infoC) accompagné de sa signature avec la clé privée du serveur (infoC, sign(infoC, Kpri)), l'identifiant IDSR2 du sous-réseau (SR2), la clé aléatoire (Ka) encryptée avec la clé publique du serveur Kpub(Ka), et la signature sur l'ensemble de ces éléments sign(B, Kprir2) effectuée avec la clé privée du sous-réseau (SR2). Comme le serveur de licences (SL) ne possède pas la clé privée (Kprir2) du sous-réseau (SR2), il ne peut pas décrypter la clé aléatoire (Ka) encryptée avec la clé publique (Kpubr2), alors le module de sécurité (SM21) fournit au serveur de licences (SL) la clé aléatoire (Ka) encryptée avec sa clé publique (Kpub). Le serveur de licences (SL) peut ainsi vérifier l'authenticité du bloc [Kpubr2(Ka), infoC, sign(infoC, Kpri), IDSR2, Kpub(Ka), sign(B, Kprir2)] grâce à la clé publique (Kpubr2) du sous-réseau (SR2) en sa possession. Après une vérification réussie, Il génère le bloc [Kpubr1 (Ka), infoC, sign(infoC, Kpri), sign(B, Kpri)] à destination du sous-réseau (SR1) ayant demandé le contenu (C) en utilisant sa clé privée (Kpri) pour décrypter la clé aléatoire (Ka), ladite clé étant ré-encryptée avec la clé publique (Kpubr1) du premier sous-réseau (SR1).

Le module de sécurité (SM11) du décodeur (STB11) de destination vérifie l'authenticité du bloc [Kpubr1 (Ka), infoC, sign(infoC, Kpri), sign(B, Kpri)] avec la clé publique Kpub du serveur (SL) et ensuite décrypte la clé aléatoire (Ka) avec la clé privée (Kprir1) du sous-réseau (SR1) correspondant à la clé publique (Kpubr1).

Selon une variante, la clé aléatoire (Ka) peut changer au cours d'une session de re-encryption que ce soit dans un réseau domestique comme illustré par la figure 1 ou dans un sous-réseau d'un réseau local comme dans la figure 2. Par exemple, le changement de clé peut s'effectuer en fonction du type de contenu, et/ou périodiquement pendant l'encryption d'un contenu donné et/ou encore en fonction d'un nombre de blocs encryptés du contenu. Par exemple, la clé change pour chaque type de contenu (sport, film, variétés, etc.), toutes les 5 minutes, ou encore tous les 1000 blocs encryptés. Dans ce cas, le bloc de contrôle transmis contient l'ensemble des clés utilisées pour l'encryption du contenu et/ou un algorithme permettant de les obtenir, cet ensemble ou algorithme étant encrypté avec la clé de réseau (Kr), respectivement de sous-réseau (Kr1, Kr2).

Selon une autre variante, le bloc d'autorisation peut également comprendre des conditions d'utilisation du contenu associé à ce bloc. Ces conditions, en général établies par le serveur de licences et de préférence signées par ce dernier, consistent par exemple en une date limite jusqu'à laquelle un contenu peut être restitué ou visualisé. Des limitations au niveau de l'exploitation du contenu par l'utilisateur comme par exemple les ports de sortie autorisés, le format autorisé, le nombre de visualisations ou les possibilités de faire une copie et le nombre de copies autorisé etc. peuvent également compléter les conditions. Des restrictions au niveau des possibilités de transmission du contenu à d'autres sous-réseaux du réseau local peuvent également être appliquées.

Cette méthode s'applique non seulement à des transferts en ligne de contenus d'un sous-réseau à un autre, mais également à des transferts effectués avec un support de données amovible où les données sont stockées par une unité appartenant à un sous-réseau pour être lues avec une unité d'un autre sous-réseau. Le support contient, en plus du contenu ré-encrypté, le bloc d'autorisation reçu lors du stockage avec l'unité du sous-réseau de départ. A la lecture, ce bloc est soumis au serveur de licences commun aux sous-réseaux pour vérification et génération d'un nouveau bloc d'autorisation contenant au moins la clé aléatoire d'encryption du contenu encryptée avec la clé du sous réseau d'arrivée.

## Revendications

1. Méthode transmission de données numériques dans un réseau local comprenant des membres constitués par au moins une première unité multimédia (DVR) disposant de moyens de stockage (HD) de contenus (C) et au moins une seconde unité multimédia (STB1, STB2, STB3) destinée à restituer le contenu (C), ladite première unité multimédia étant connectée d'une part à un serveur de diffusion (SD) de données audio/vidéo (D) numériques encryptées et d'autre part à la seconde unité multimédia (STB1, STB2, STB3), chaque membre possédant un module de sécurité (SM0, SM1, SM2, SM3) incluant une clé de réseau (Kr), ladite première unité multimédia (DVR) reçoit et décrypte les données encryptées formant un contenu (C) diffusé par le serveur de diffusion (SD), et re-encrypte le contenu (C) préalablement décrypté, ladite méthode est **caractérisée en ce que** le contenu est re-encrypté avec une clé aléatoire (Ka) et transmis à la seconde unité multimédia (STB1, STB2, STB3) accompagné par un bloc d'autorisation Kr(Ka) comprenant la clé aléatoire (Ka) encryptée avec la clé de réseau (Kr), ladite seconde unité multimédia (STB1, STB2, STB3) décrypte le bloc d'autorisation Kr(Ka), et extrait la clé aléatoire (Ka) servant à décrypter le contenu (C).

2. Méthode selon la revendication 1 **caractérisée en ce que** la première unité multimédia (DVR) consistant en un décodeur/enregistreur de données audio/vidéo numériques stocke dans une mémoire de masse les données re-encryptée avec la clé aléatoire (Ka) et/ou les transmet à la seconde unité multimédia (STB1, STB2, STB3) consistant en un décodeur de télévision numérique.

3. Méthode selon la revendication 2 **caractérisée en ce que** la seconde unité multimédia (STB1, STB2, STB3) est équipée d'au moins un enregistreur/lecteur de supports de stockage de données amovible et/ou au moins un disque dur fixe ou amovible.

4. Méthode selon la revendication 1 **caractérisée en ce que** la première unité multimédia (DVR) décrypte le contenu diffusé par le serveur (SD) au moyen de mots de contrôle (CW) issus de messages de contrôle (ECM) en fonction des droits contenus dans le module de sécurité (SM0) associé à ladite unité (DVR), ledit contenu décrypté étant immédiatement re-encrypté avec la clé aléatoire (Ka) générée par ledit module de sécurité (SM0) avant son stockage et/ou sa transmission vers la seconde unité (STB1, STB2, STB3).

5. Méthode selon la revendication 1 dans laquelle le réseau local comprend au moins un membre constitué par un sous-réseau (SR1, SR2) comprenant au moins une première unité multimédia (DVR1, DVR2) disposant de moyens de stockage (HD1, HD2) de contenus connectée à au moins une seconde unité multimédia (STB11,..., STB13, STB21,..., STB23) destinée à restituer le contenu (C), ledit sous-réseau (SR1, SR2) étant connecté à un serveur de diffusion (SD) de données audio/vidéo numériques encryptées et à un serveur de licences (SL), chaque unité du sous-réseau possède un module de sécurité (SM10,..., SM13, SM20,..., SM23) incluant une clé personnelle (Kr1, Kr2) du sous-réseau (SR1, SR2) et une clé publique (Kpub) correspondant à une clé privée (Kpri) propre au serveur de licences (SL), ladite méthode est **caractérisée en ce qu'**elle comprend les étapes suivantes:
- transmission de données encryptées formant un contenu (C) par le serveur de diffusion (SD) au serveur de licences (SL) chargé d'attribuer un identifiant audit contenu,
- réception et décryption du contenu (C) par la première unité multimédia (DVR1, DVR2) du sous-réseau (SR1, SR2),
- re-encryption du contenu (C) préalablement décrypté au moyen d'une clé aléatoire (Ka),
- formation d'un bloc d'autorisation [Kr1 (Ka), infoC, sign(infoC, Kpri)] comprenant au moins un bloc d'informations (infoC) identifiant le contenu (C), un bloc de signature sign(infoC, Kpri) du serveur de licences (SL) et la clé aléatoire (Ka) encryptée avec la clé personnelle (Kr1) du sous-réseau,
- transmission du contenu re-encrypté Ka(C) accompagné par le bloc d'autorisation [Kr1 (Ka), infoC, sign(infoC, Kpri)] à la seconde unité multimédia,
- vérification de l'authenticité du contenu au moyen du bloc d'information (infoC) et du bloc de signature sign(infoC, Kpri) du serveur de licences (SL).
- extraction par la seconde unité multimédia de la clé aléatoire (Ka) du bloc d'autorisation [Kr1 (Ka), infoC, sign(infoC, Kpri)] et décryption du contenu (C) avec ladite clé aléatoire (Ka).

6. Méthode selon la revendication 5 **caractérisée en ce que** la première unité multimédia (DVR1, DVR2) d'un sous-réseau (SR1, SR2) consistant en un décodeur/enregistreur de données audio/vidéo numériques stocke dans une mémoire de masse les données re-encryptées avec la clé aléatoire (Ka) et/ou les transmet à la seconde unité multimédia (STB11,..., STB13, STB21,..., STB23) consistant en un décodeur de télévision numérique.

7. Méthode selon la revendication 5 **caractérisée en ce que** la première unité multimédia (DVR1, DVR2) d'un sous-réseau décrypte le contenu diffusé par le serveur au moyen de mots de contrôle CW issus de messages de contrôle ECM en fonction des droits contenus dans le module de sécurité (SM10, SM20) associé à ladite unité (DVR1, DVR2), ledit contenu décrypté étant immédiatement re-encrypté avec la clé aléatoire (Ka) générée par ledit module de sécurité (SM10, SM20) avant son stockage et/ou sa transmission vers la seconde unité.

8. Méthode selon la revendication 5 **caractérisée en ce que** le bloc de signature sign(infoC, Kpri) du serveur de licences (SL) est formé d'un code d'authentification calculé à partir du bloc d'information (infoC), ledit code étant encrypté avec la clé privée (Kpri) du serveur de licences (SL).

9. Méthode selon la revendication 5 **caractérisée en ce que** le module de sécurité vérifie l'authenticité du contenu (C) avec le bloc de signature sign(infoC, Kpri) du serveur de licences (SL), en comparant le code d'authentification reçu et décrypté au moyen de la clé publique (Kpub) dudit serveur avec le code d'authentification calculé à partir du bloc d'information (infoC) reçu.

10. Méthode selon la revendication 5 **caractérisée en ce qu'**un contenu (C) est mis à disposition d'une unité (STB11) d'un premier sous-réseau (SR1) par un second sous-réseau (SR2) dépendant d'un même serveur de licences (SL) selon les étapes suivantes:
- envoi du bloc d'autorisation [Kr2(Ka), infoC, sign(infoC, Kpri), IDSR2, sign(B, Kr2)] reçu du second sous-réseau (SR2) au serveur de licences (SL) à partir de l'unité (STB11) du premier sous-réseau (SR1),
- vérification de l'authenticité du bloc d'autorisation [Kr2(Ka), infoC, sign(infoC, Kpri), IDSR2, sign(B, Kr2)] par le serveur de licences (SL) au moyen de la signature sign(B, Kr2) effectuée sur toutes les données (B) dudit bloc précédant ladite signature sign(B, Kr2) en utilisant la clé (Kr2) du second sous-réseau,
- en cas de réussite de la vérification, génération et transmission à l'unité (STB11) du premier sous-réseau (SR1) d'un nouveau bloc d'autorisation [Kr1 (Ka), infoC sign(infoC, Kpri), sign(B, Kpri)] comprenant au moins la clé aléatoire (Ka) d'encryption du contenu (C) encryptée avec la clé (Kr1) du premier sous-réseau (SR1).
- vérification de l'authenticité du nouveau bloc d'autorisation [Kr1 (Ka), infoC sign(infoC, Kpri), sign(B, Kpri)] reçu et décryption du contenu (C) avec la clé aléatoire (Ka) extraite dudit bloc par le module de sécurité (SM11 ) de l'unité (STB11) avec la clé (Kr1) du premier sous-réseau (SR1).

11. Méthode selon la revendication 10 **caractérisée en ce qu'**un contenu (C) est mis à disposition d'une unité (STB11) d'un premier sous-réseau (SR1) par un second sous-réseau (SR2) dépendant d'un même serveur de licences (SL) au moyen d'un support de donnée amovible sur lequel le contenu (C) est stocké par l'unité (STB21) du second sous-réseau (SR2) et lu par l'unité (STB11) du premier sous-réseau (SR1).

12. Méthode selon la revendication 5 **caractérisée en ce que** les clés (Kr1, Kr2, ...) personnelles de chaque sous-réseau (SR1, SR2, ...) forment des paires de clés asymétriques (Kpubr1, Kprir1, Kpubr2, Kprir2), les clés publiques (Kpubr1, Kpubr2) de chaque paire étant stockées dans le serveur de licences (SL) tandis que les clés privées (Kprir1, Kprir2) correspondantes sont stockées dans les modules de sécurité (SM10, SM11, SM12,..., SM20, SM21, SM22,...) des unités (DRV1, STB11, STB12,..., DRV2, STB21, STB22,...) respectives de chaque sous-réseau (SR1, SR2, ...).

13. Méthode selon la revendication 12 **caractérisée en ce que** le bloc d'autorisation [Kpubr2(Ka), infoC, sign(infoC, Kpri), IDSR2, Kpub(Ka), sign(B, Kprir2)] provenant du second sous-réseau (SR2) comprend au moins la clé aléatoire (Ka) encryptée avec la clé publique (Kpub) du serveur de licences (SL) et un identifiant (IDSR2) du second sous réseau (SR2) dans lequel ledit bloc a été généré.

14. Méthode selon la revendication 13 **caractérisée en ce que** le serveur de licences (SL) vérifie l'authenticité du bloc d'autorisation (Kpubr2(Ka), infoC, sign(infoC, Kpri), IDSR2, Kpub(Ka), sign(B, Kprir2)] au moyen de la signature sign(B, Kprir2) effectuée sur les données dudit bloc en utilisant la clé publique (Kpubr2) du second sous-réseau (SR2) et génère un nouveau bloc d'autorisation [Kpubr1 (Ka), infoC, sign(infoC, Kpri), sign(B, Kpri)] à destination du premier sous-réseau (SR1) en utilisant sa clé privée (Kpri) pour décrypter la clé aléatoire (Ka), ladite clé étant ré-encryptée avec la clé publique (Kpubr1) du premier sous-réseau (SR1) .

15. Méthode selon la revendication 14 **caractérisée en ce que** le module de sécurité (SM11) de l'unité (STB11) de destination vérifie l'authenticité du bloc [Kpubr1 (Ka), infoC, sign(infoC, Kpri), sign(B, Kpri)] reçu avec la clé publique Kpub du serveur de licences (SL) et ensuite décrypte la clé aléatoire (Ka) avec la clé privée (Kprir1) du premier sous-réseau (SR1) correspondant à la clé publique (Kpubr1) dudit premier sous-réseau (SR1).

16. Méthode selon la revendication 1 **caractérisée en ce que** la clé aléatoire (Ka) change en fonction du contenu et/ou périodiquement dans le temps et/ou en fonction du nombre de blocs de données encryptés.

17. Méthode selon la revendication 16 **caractérisée en ce que** le bloc d'autorisation comprend l'ensemble des clés aléatoire utilisées pour l'encryption du contenu et/ou un algorithme permettant d'obtenir lesdites clés, cet ensemble et/ou algorithme étant encrypté avec la clé de réseau ou de sous-réseau.

18. Méthode selon la revendication 5 **caractérisée en ce que** le bloc d'autorisation comprend des conditions d'utilisation du contenu associé audit bloc, lesdites conditions étant établies et signées par le serveur de licences.

19. Méthode selon la revendication 18, **caractérisée en ce que** les conditions comprennent une date limite jusqu'à laquelle un contenu peut être utilisé et/ou à des limitations au niveau des possibilités d'exploitation dudit contenu par un utilisateur et/ou à des limitations au niveau des possibilités de transmission dudit contenu à d'autres sous-réseaux du réseau local.

## Claims

1. Method for transmitting digital data in a local network comprising members constituted by at least one first multimedia unit (DVR) having content (C) storage means (HD) and at least one second multimedia unit (STB1, STB2, STB3) intended to restore the content (C), said first multimedia unit being connected on one hand to a broadcasting server (SD) of encrypted digital audio/video data (D) and on the other hand to the second multimedia unit (STB1, STB2, STB3), each member possessing a security module (SM0, SM1, SM2, SM3) including a network key (Kr), said first multimedia unit (DVR) receives and decrypts the encrypted data forming a content (C) broadcasted by the broadcasting server (SD) and re-encrypts the content (C) previously decrypted, said method is **characterized in that** the content is re-encrypted with a random key (Ka) and transmitted to the second multimedia unit (STB1, STB2, STB3) accompanied by an authorization block Kr(Ka) comprising the random key (Ka) encrypted with the network key (Kr), said second multimedia unit (STB1, STB2, STB3) decrypts the authorization block Kr(Ka), and extracts the random key (Ka) to be used for decrypting the content (C).

2. Method according to claim 1 **characterized in that** the first multimedia unit (DVR) consisting of an audio/video digital data decoder/recorder stores in a mass memory the data re-encrypted with the random key (Ka) and/or transmits said data to the second multimedia unit (STB1, STB2, STB3) consisting of a digital television decoder.

3. Method according to claim 2 **characterized in that** the second multimedia unit (STB1, STB2, STB3) is equipped with at least one recorder/reader of removable data storage supports and/or at least one fixed or removable hard disk.

4. Method according to claim 1 **characterized in that** the first multimedia unit (DVR) decrypts the content broadcasted by the server (SD) by means of control words (CW) extracted from control messages (ECM) according to the rights contained in the safety module (SM0) associated to said unit (DVR), said decrypted content being immediately re-encrypted with the random key (Ka) generated by said security module (SM0) before its storage and/or transmission towards the second unit (STB1, STB2, STB3).

5. Method according to claim 1 wherein the local network includes at least one member constituted by a sub-network (SR1, SR2) comprising at least one first multimedia unit (DVR1, DVR2) having content storage means (HD1, HD2) connected to at least one second multimedia unit (STB11...., STB13, STB21 ...., STB23) intended to restore the content (C), said sub-network (SR1, SR2) being connected to a broadcasting server (SD) of encrypted audio/video digital data and to a license server (SL), each unit of the sub-network having a security module (SM10...., SM13, SM20...., SM23) including a personal key (Kr1, Kr2) of the sub-network (SR1, SR2) and a public key (Kpub) corresponding to a private key (Kpri) pertaining to the license server (SL), said method is **characterized in that** it includes the following steps:
- transmission of encrypted data forming a content (C) by the broadcasting server (SD) to the license server (SL) which attributes an identifier to said content (C),
- reception and decryption of the content (C) by the first multimedia unit (DVR1, DVR2) of the sub-network (SR1, SR2),
- re-encryption of the content (C) previously decrypted by means of a random key (Ka),
- formation of an authorization block [Kr1 (Ka), infoC, sign(infoC, Kpri ))] comprising at least one information block (infoC) identifying the content (C), a signature block sign(infoC, Kpri) of the license server (SL) and the random key (Ka) encrypted with the personal key (Kr1) of the sub-network,
- transmission of the re-encrypted content Ka(C) accompanied by the authorization block [Kr1 (Ka), infoC, sign(infoC, Kpri ))] to the second multimedia unit,
- verification of the authenticity of the content (C) by means of the information block (infoC) and of the signature block sign(infoC, Kpri) of the license server (SL).
- extraction by the second multimedia unit of the random key (Ka) of the authorization block [Kr1 (Ka), infoC, sign(infoC, Kpri ))] and decryption of the content (C) with said random key (Ka).

6. Method according to claim 5 **characterized in that** the first multimedia unit (DVR1, DVR2) of a sub-network (SR1, SR2) consisting of an audio/video digital data decoder/recorder stores in a mass memory the data re-encrypted with the random key (Ka) and/or transmits it to the second multimedia unit (STB11...., STB13, STB21...., STB23) consisting of a digital television decoder.

7. Method according to claim 5 **characterized in that** the first multimedia unit (DVR1, DVR2) of a sub-network decrypts the content broadcasted by the server by means of control words CW originating from control messages ECM according to the rights contained in the security module (SM10, SM20) associated to said unit (DVR1, DVR2), said decrypted content immediately being re-encrypted with the random key (Ka) generated by said security module (SM10, SM20) before its storage and/or its transmission towards the second unit.

8. Method according to claim 5 **characterized in that** the signature block sign(infoC, Kpri) of the license server (SL) is formed with an authentication code calculated from the information block (infoC), said code being encrypted with the private key (Kpri) of the license server (SL).

9. Method according to claim 5 **characterized in that** the security module verifies the authenticity of the content (C) with the signature block sign(infoC, Kpri) of the license server (SL), by comparing the authentication code received and decrypted by means of the public key (Kpub) of said server with the authentication code calculated from the received information block (infoC).

10. Method according to claim 5 **characterized in that** a content (C) is made available to a unit (STB11) of a first sub-network (SR1) by a second sub-network (SR2) depending on the same license server (SL) according to the following steps:
- sending of the authorization block [Kr2(Ka), infoC, sign(infoC, Kpri), IDSR2, sign(B, Kr2 ))] received from the second sub-network (SR2) to the license server (SL) from the unit (STB11) of the first sub-network (SR1),
- verification of the authenticity of the authorization block [Kr2(Ka), infoC, sign(infoC, Kpri), IDSR2, sign(B, Kr2 ))] by the license server (SL) by means of the signature sign(B, Kr2) carried out on all the data (B) of said block preceding said signature sign(B, Kr2) using the key (Kr2) of the second sub-network,
- in the case of successful verification, generation and transmission to the unit (STB11) of the first sub-network (SR1) of a new authorization block [Kr1 (Ka), infoC sign(infoc, Kpri), sign(B, Kpri ))] comprising at least the random encryption key (Ka) of the content (C) encrypted with the key (Kr1) of the first sub-network (SR1).
- verification of the authenticity of the new authorization block [Kr1 (Ka), infoC sign(infoC, Kpri), sign(B, Kpri ))] received and decryption of the content (C) with the random key (Ka) extracted from said block by the security module (SM11) of the unit (STB11) with the key (Kr1) of the first sub-network (SR1).

11. Method according to claim 10 **characterized in that** a content (C) is made available to a unit (STB11) of a first sub-network (SR1) by a second sub-network (SR2) depending on a same license server (SL) by means of a removable data support on which the content (C) is stored by the unit (STB21) of the second sub-network (SR2) and read by the unit (STB11) of the first sub-network (SR1).

12. Method according to claim 5 **characterized in that** the personal keys (Kr1, Kr2, ...) of each sub-network (SR1, SR2, ...) form asymmetric key pairs (Kpubr1, Kprir1, Kpubr2, Kprir2), the public keys (Kpubr1, Kpubr2) of each pair being stored in the license server (SL) while the corresponding private keys (Kprir1, Kprir2) are stored in the security modules (SM10, SM11, SM12...., SM20, SM21, SM22....) of the respective units (DRV1, STB11, STB12...., DRV2, STB21, STB22....) of each sub-network (SR1, SR2, ...).

13. Method according to claim 12 **characterized in that** the authorization block [Kpubr2(Ka), infoC, sign(infoC, Kpri), IDSR2, Kpub(Ka), sign(B, Kprir2 ))] originating from the second sub-network (SR2) includes at least the random key (Ka) encrypted with the public key (Kpub) of the license server (SL) and an identifier (IDSR2) of the second sub-network (SR2) in which said block has been generated.

14. Method according to claim 13 **characterized in that** the license server (SL) verifies the authenticity of the authorization block [Kpubr2(Ka), infoC, sign(infoC, Kpri), IDSR2, Kpub(Ka), sign(B, Kprir2 ))] by means of the signature sign(B, Kprir2) carried out on the data of said block using the public key (Kpubr2) of the second sub-network (SR2) and generates a new authorization block [Kpubr1 (Ka), infoC, sign(infoC, Kpri), sign(B, Kpri ))] intended for the first sub-network (SR1) using its private key (Kpri) to decrypt the random key (Ka), said key being re-encrypted with the public key (Kpubr1) of the first sub-network (SR1).

15. Method according to claim 14 **characterized in that** the security module (SM11) of the recipient unit (STB11) verifies the authenticity of the received block [Kpubr1 (Ka), infoC, sign(infoC, Kpri), sign(B, Kpri ))] with the public key Kpub of the license server (SL) and then decrypts the random key (Ka) with the private key (Kprir1) of the first sub-network (SR1) corresponding to the public key (Kpubr1) of said first sub-network (SR1).

16. Method according to claim 1 **characterized in that** the random key (Ka) changes according to content and/or periodically in time and/or according to the number of data blocks encrypted.

17. Method according to claim 16 **characterized in that** the authorization block includes the whole set of random keys used for the encryption of the content and/or an algorithm allowing obtaining said keys, this set and/or algorithm being encrypted with the network key or the sub-network key.

18. Method according to claim 5 **characterized in that** the authorization block includes usage conditions of the content associated to said block, said conditions being established and signed by the license server.

19. Method according to claim 18, **characterized in that** the conditions comprise a deadline until which a content can be used and/or limitations at the level of the possibilities of use of said content by a user and/or limitations at the level of the transmission possibilities of said content to other sub-networks of the local network.

## Patentansprüche

1. Verfahren zur Übertragung digitaler Daten in einem lokalen Netzwerk, zu dem Teilnehmer gehören, die mindestens eine erste Multimedia-Einheit (DVR) beinhalten, welche über Speichermittel (HD) für Inhalte (C) und mindestens eine zweite Multimedia-Einheit (STB1, STB2, STB3) verfügt, die zur Wiedergabe des Inhalts (C) dient, wobei die genannte erste Multimedia-Einheit einerseits an einen Verbreitungsserver (SD) für verschlüsselte digitale Audio-/Videodaten (D) angeschlossen ist, sowie andererseits an die zweite Multimedia-Einheit (STB1, STB2, STB3), und jeder Teilnehmer ein Sicherheitsmodul (SM0, SM1, SM2, SM3) einschließlich eines Netzschlüssels (Kr) beinhaltet; die genannte erste Multimedia-Einheit (DVR) empfängt und entschlüsselt die verschlüsselten Daten, aus denen ein Inhalt (C) besteht, welcher vom Verbreitungsserver (SD) verbreitet wird, und verschlüsselt den zuvor entschlüsselten Inhalt (C) erneut, wobei das genannte Verfahren **dadurch gekennzeichnet ist, dass** der Inhalt mit einem per Zufall erzeugten Schlüssel (Ka) neu verschlüsselt und zusammen mit einem Freigabeblock Kr(Ka), der den mit dem Netzschlüssel (Kr) verschlüsselten, per Zufall erzeugten Schlüssel (Ka) enthält, an die zweite Multimedia-Einheit (STB1, STB2, STB3) übermittelt wird; die genannte zweite Multimedia-Einheit (STB1, STB2, STB3) entschlüsselt den Freigabeblock Kr(Ka) und entnimmt ihm den per Zufall erzeugten Schlüssel (Ka), mit dem Inhalt (C) entschlüsselt wird.

2. Verfahren gemäß Patentanspruch 1, **dadurch gekennzeichnet, dass** die erste Multimedia-Einheit (DVR), die aus einem Dekodier-/Aufzeichnungsgerät für digitale Audio-/Videodaten besteht, die mit dem per Zufall erzeugten Schlüssel (Ka) erneut verschlüsselten Daten in einem Massenspeicher speichert und/oder sie an die zweite Multimedia-Einheit (STB1, STB2, STB3) übermittelt, die aus einem digitalen Fernseh-Dekodiergerät besteht.

3. Verfahren gemäß Patentanspruch 2, **dadurch gekennzeichnet, dass** die zweite Multimedia-Einheit (STB1, STB2, STB3) mit mindestens einem Aufzeichnungs-/Abspielgerät für herausnehmbare Datenspeichermedien und/oder mindestens einer ortsfesten oder herausnehmbaren Festplatte ausgestattet ist.

4. Verfahren gemäß Patentanspruch 1, **dadurch gekennzeichnet, dass** die erste Multimedia-Einheit (DVR) den vom Server (SD) verbreiteten Inhalt anhand von Kontrollwörtern (CW) entschlüsselt, die aus Kontrollnachrichten (ECM) hervorgegangen sind, entsprechend den Rechten, die im mit der genannten Einheit (DVR) verbundenen Sicherheitsmodul (SM0) enthalten sind, wobei der genannte entschlüsselte Inhalt sofort anhand des vom genannten Sicherheitsmodul (SM0) per Zufall erzeugten Schlüssels (Ka) erneut verschlüsselt wird, bevor er gespeichert und/oder an die zweite Einheit (STB1, STB2, STB3) übermittelt wird.

5. Verfahren gemäß Patentanspruch 1, bei der das lokale Netzwerk mindestens einen Teilnehmer bestehend aus einem Unternetzwerk (SR1, SR2) mit mindestens einer ersten Multimedia-Einheit (DVR1, DVR2) umfasst, welche über Speichermittel (HD1, HD2) für Inhalte verfügt und an mindestens eine zweite Multimedia-Einheit (STB11,..., STB13, STB21,..., STB23) zur Wiedergabe des Inhalts (C) angeschlossen ist, wobei das genannte Unternetzwerk (SR1, SR2) an einen Verbreitungsserver (SD) für verschlüsselte digitale Audio-/Videodaten und einen Lizenzserver (SL) angeschlossen ist, jede Einheit des Unternetzwerks über ein Sicherheitsmodul (SM10,..., SM13, SM20,..., SM23) verfügt, einschließlich eines individuellen Schlüssels (Kr1, Kr2) für das Unternetzwerk (SR1, SR2) und eines öffentlichen Schlüssels (Kpub), der einem dem Lizenzserver (SL) eigenen Privatschlüssel (Kpri) entspricht, wobei das genannte Verfahren **dadurch gekennzeichnet ist, dass** es folgende Schritte umfasst:
- Übertragung verschlüsselter, einen Inhalt (C) darstellender Daten durch den Verbreitungsserver (SD) an den Lizenzserver (SL), der die Aufgabe hat, dem besagten Inhalt eine Kennung zuzuordnen,
- Empfang und Entschlüsselung von Inhalt (C) durch die erste Multimedia-Einheit (DVR1, DVR2) des Unternetzwerks (SR1, SR2),
- erneute Verschlüsselung des zuvor entschlüsselten Inhalts (C) anhand eines per Zufall erzeugten Schlüssels (Ka),
- Bildung eines Freigabeblocks [Kr1 (Ka), infoC, sign(infoC, Kpri)] mit mindestens einem Informationsblock (infoC) als Kennung für den Inhalt (C), einem Unterschriftsblock (infoC, Kpri) des Lizenzservers (SL) und dem per Zufall erzeugten Schlüssel (Ka), der mit dem individuellen Schlüssel (Kr1) des Unternetzwerks verschlüsselt ist,
- Übertragung des erneut verschlüsselten Inhalts Ka(C) gemeinsam mit dem Freigabeblock [Kr1(Ka), infoC, sign(infoC, Kpri)] an die zweite Multimedia-Einheit,
- Überprüfung anhand von Informationsblock (infoC) und Unterschriftsblock sign(infoC, Kpri) des Lizenzservers (SL), dass der Inhalt authentisch ist,
- Ermittlung des per Zufall erzeugten Schlüssels (Ka) im Freigabeblock [Kr1(Ka), infoC, sign(infoC, Kpri)] durch die zweite Multimedia-Einheit und Entschlüsselung von Inhalt (C) anhand dieses per Zufall erzeugten Schlüssels (Ka).

6. Verfahren gemäß Patentanspruch 5, **dadurch gekennzeichnet, dass** die erste Multimedia-Einheit (DVR1, DVR2) eines Unternetzwerks (SR1, SR2), die aus einem Dekodier-/Aufzeichnungsgerät für digitale Audio-/Videodaten besteht, die mit dem per Zufall erzeugten Schlüssel (Ka) erneut verschlüsselten Daten in einem Massenspeicher speichert und/oder sie an die zweite Multimedia-Einheit (STB11, ..., STB13, STB21, ..., STB23) übermittelt, die aus einem digitalen Fernseh-Dekodiergerät besteht.

7. Verfahren gemäß Patentanspruch 5, **dadurch gekennzeichnet, dass** die erste Multimedia-Einheit (DVR1, DVR2) eines Unternetzwerks den vom Server verbreiteten Inhalt anhand von Kontrollwörtern CW entschlüsselt, die aus Kontrollnachrichten ECM hervorgegangen sind, entsprechend den Rechten, die im mit der genannten Einheit (DVR1, DVR2) verbundenen Sicherheitsmodul (SM10, SM20) enthalten sind, wobei der genannte entschlüsselte Inhalt sofort anhand des vom genannten Sicherheitsmodul (SM10, SM20) per Zufall erzeugten Schlüssels (Ka) erneut verschlüsselt wird, bevor er gespeichert und/oder an die zweite Einheit übermittelt wird.

8. Verfahren gemäß Patentanspruch 5, **dadurch gekennzeichnet, dass** der Unterschriftsblock sign(infoC, Kpri) des Lizenzservers (SL) von einem Authentifizierungscode gebildet wird, der ausgehend vom Informationsblock (infoC) errechnet wird, wobei der genannte Code mit dem Privatschlüssel (Kpri) des Lizenzservers (SL) verschlüsselt wird.

9. Verfahren gemäß Patentanspruch 5, **dadurch gekennzeichnet, dass** das Sicherheitsmodul die Authentizität des Inhalts (C) anhand des Unterschriftsblocks sign(infoC, Kpri) des Lizenzservers (SL) überprüft, indem es den erhaltenen Authentifizierungscode nach seiner Entschlüsselung anhand des öffentlichen Schlüssels (Kpub) dieses Servers mit dem Authentifizierungscode vergleicht, der sich aus dem erhaltenen Informationsblock (infoC) ergibt.

10. Verfahren gemäß Patentanspruch 5, **dadurch gekennzeichnet, dass** ein Inhalt (C) einer Einheit (STB11) eines ersten Unternetzwerks (SR1) durch ein zweites Unternetzwerk (SR2) zur Verfügung gestellt wird, das vom gleichen Lizenzserver (SL) abhängt, gemäß folgendem Ablauf:
- Übersendung des vom zweiten Unternetzwerk (SR2) erhaltenen Freigabeblocks [Kr2(Ka), infoC, sign(infoC, Kpri), IDSR2, sign(B, Kr2)] an den Lizenzserver (SL) durch Einheit (STB11) des ersten Unternetzwerks (SR1),
- Überprüfung durch den Lizenzserver (SL), dass der Freigabeblock [Kr2(Ka), infoC, sign(infoC, Kpri), IDSR2, sign(B, Kr2)] authentisch ist, und zwar anhand der Unterschrift sign(B, Kr2) auf allen Daten (B) des genannten Blocks vor der genannten Unterschrift sign(B, Kr2), unter Verwendung des Schlüssels (Kr2) des zweiten Unternetzwerks,
- bei positivem Abschluss der Überprüfung, Erzeugung eines neuen Freigabeblocks [Kr1 (Ka), infoC sign(infoC, Kpri), sign(B, Kpri)] mit mindestens dem per Zufall erzeugten Schlüssel (Ka) zur Verschlüsselung von Inhalt (C), welcher Schlüssel mit dem Schlüssel (Kr1) des ersten Unternetzwerks (SR1) verschlüsselt ist, und Übertragung an Einheit (STB11) des ersten Unternetzwerks (SR1),
- Überprüfung, dass der eingegangene neue Freigabeblock [Kr1 (Ka), infoC sign(infoC, Kpri), sign(B, Kpri)] authentisch ist, und Entschlüsselung von Inhalt (C) anhand des per Zufall erzeugten Schlüssels (Ka), der dem genannten Block vom Sicherheitsmodul (SM11) von Einheit (STB11) mithilfe des Schlüssels (Kr1) des ersten Unternetzwerks (SR1) entnommen wurde.

11. Verfahren gemäß Patentanspruch 10, **dadurch gekennzeichnet, dass** ein Inhalt (C) einer Einheit (STB11) eines ersten Unternetzwerks (SR1) von einem zweiten Unternetzwerk (SR2), das vom selben Lizenzserver (SL) abhängt, mittels eines herausnehmbaren Speichermediums zur Verfügung gestellt wird, auf dem der Inhalt (C) von der Einheit (STB21 ) des zweiten Unternetzwerks (SR2) gespeichert und von der Einheit (STB11 ) des ersten Unternetzwerks (SR1) gelesen wird.

12. Verfahren gemäß Patentanspruch 5, **dadurch gekennzeichnet, dass** die individuellen Schlüssel (Kr1, Kr2, ...) jedes Unternetzwerks (SR1, SR2, ...) asymmetrische Schlüsselpaare bilden (Kpubr1, Kprir1, Kpubr2, Kprir2), wobei die öffentlichen Schlüssel (Kpubr1, Kpubr2) jedes Paars auf dem Lizenzserver (SL) gespeichert werden, während die entsprechenden Privatschlüssel (Kprir1, Kprir2) in den Sicherheitsmodulen (SM10, SM11, SM12,..., SM20, SM21, SM22,...) derjeweiligen Einheiten (DRV1, STB11, STB12,..., DRV2, STB21, STB22,...) jedes Unternetzwerks (SR1, SR2, ...) gespeichert werden.

13. Verfahren gemäß Patentanspruch 12, **dadurch gekennzeichnet, dass** der vom zweiten Unternetzwerk (SR2) eingehende Freigabeblock [Kpubr2(Ka), infoC, sign(infoC, Kpri), IDSR2, Kpub(Ka), sign(B, Kprir2)] mindestens den per Zufall erzeugten Schlüssel (Ka) beinhaltet, der mit dem öffentlichen Schlüssel (Kpub) des Lizenzservers (SL) verschlüsselt wurde, sowie eine Kennung (IDSR2) des zweiten Unternetzwerks (SR2), in dem der genannte Block erzeugt wurde.

14. Verfahren gemäß Patentanspruch 13, **dadurch gekennzeichnet, dass** der Lizenzserver (SL) die Authentizität des Freigabeblocks [Kpubr2(Ka), infoC, sign(infoC, Kpri), IDSR2, Kpub(Ka), sign(B, Kprir2)] anhand der Unterschrift sign(B, Kprir2) überprüft, die auf den Daten des genannten Blocks stattfindet, und zwar anhand des öffentlichen Schlüssels (Kpubr2) des zweiten Unternetzwerks (SR2), und einen neuen Freigabeblock [Kpubr1 (Ka), infoC, sign(infoC, Kpri), sign(B, Kpri)] erzeugt, der für das erste Unternetzwerk (SR1) bestimmt ist, indem er seinen Privatschlüssel (Kpri) dazu verwendet, den per Zufall erzeugten Schlüssel (Ka) zu entschlüsseln, wobei der genannte Schlüssel mit dem öffentlichen Schlüssel (Kpubr1) des ersten Unternetzwerks (SR1) erneut verschlüsselt wird.

15. Verfahren gemäß Patentanspruch 14, **dadurch gekennzeichnet, dass** das Sicherheitsmodul (SM11) der Zieleinheit (STB11) die Authentizität des erhaltenen Blocks [Kpubr1 (Ka), infoC, sign(infoC, Kpri), sign(B, Kpri)] anhand des öffentlichen Schlüssels Kpub des Lizenzservers (SL) prüft und anschließend den per Zufall erzeugten Schlüssel (Ka) mit dem Privatschlüssel (Kprir1) des ersten Unternetzwerks (SR1) entschlüsselt, der dem öffentlichen Schlüssel (Kpubr1) des genannten ersten Unternetzwerks (SR1) entspricht.

16. Verfahren gemäß Patentanspruch 1, **dadurch gekennzeichnet, dass** der per Zufall erzeugte Schlüssel (Ka) sich je nach Inhalt und/oder von Zeit zu Zeit und/oder je nach Anzahl der verschlüsselten Datenblöcke ändert.

17. Verfahren gemäß Patentanspruch 16, **dadurch gekennzeichnet, dass** der Freigabeblock sämtliche zur Inhaltsverschlüsselung herangezogenen, per Zufall erzeugten Schlüssel und/oder einen Algorithmus umfasst, mit dem die genannten Schlüssel erlangt werden können, wobei diese Gesamtheit und/oder der Algorithmus mit dem Netzwerk- oder Unternetzwerkschlüssel verschlüsselt wird.

18. Verfahren gemäß Patentanspruch 5, **dadurch gekennzeichnet, dass** der Freigabeblock die Nutzungsbedingungen für den Inhalt umfasst, der mit dem genannten Block verbunden ist, wobei die genannten Bedingungen vom Lizenzserver erstellt und unterschrieben werden.

19. Verfahren gemäß Patentanspruch 18, **dadurch gekennzeichnet, dass** die Bedingungen einen Stichtermin beinhalten, bis zu dem ein Inhalt genutzt werden kann, und/oder Begrenzungen hinsichtlich der Nutzungsmöglichkeiten des genannten Inhalts durch einen Anwender und/oder Begrenzungen hinsichtlich der Übertragungsmöglichkeiten des genannten Inhalts an andere Unternetzwerke des lokalen Netzwerks.
